Europäisches Patentamt

European Patent Office

Office européen des brevets

(11) Publication number: **0 115 862**
**B1**

# EUROPEAN PATENT SPECIFICATION

(45) Date of publication of patent specification: **09.08.89**

(51) Int. Cl.⁴: **F 02 D 21/08**

(21) Application number: **84101112.5**

(22) Date of filing: **03.02.84**

(54) Exhaust gas recirculation control method and apparatus for internal combustion engine.

(30) Priority: **03.02.83 JP 17137/83**

(43) Date of publication of application:
**15.08.84 Bulletin 84/33**

(45) Publication of the grant of the patent:
**09.08.89 Bulletin 89/32**

(84) Designated Contracting States:
**DE FR GB**

(56) References cited:
**EP-A-0 079 581**
**GB-A-2 098 360**
**JP-A-57 041 455**
**JP-A-57 044 760**
**US-A-4 244 023**
**US-A-4 378 776**

(73) Proprietor: **MITSUBISHI DENKI KABUSHIKI KAISHA**
**2-3, Marunouchi 2-chome Chiyoda-ku Tokyo 100 (JP)**

(72) Inventor: **Tsutsumi, Kazumichi c/o Mitsubishi Denki K. K.**
**Himeji Works No. 840, Chiyoda-cho Himeji-shi Hyogo (JP)**

(74) Representative: **Lehn, Werner, Dipl.-Ing. et al Hoffmann, Eitle & Partner Patentanwälte Arabellastrasse 4 D-8000 München 81 (DE)**

Courier Press, Leamington Spa, England.

**Description**

The present invention relates to a method and apparatus for controlling the amount of exhaust gas recirculation (hereinafter abbreviated to "EGR" when applicable) in an internal combustion engine of an automobile or the like.

In a modern internal combustion engine, an electronic device such as a microcomputer is used to control the amount of EGR. In general, the amount of EGR is set by the operating position of a needle valve in an EGR passage, which is in turn determined by various operating conditions of the engine. Particularly, the effective diameter of the EGR passage changes with the movement of the needle valve, and the amount of EGR is changed in proportion to the effective diameter. Therefore, EGR control can be achieved by feeding the operating position of the needle valve back and subtracting it from the target position which is defined according to the desired amount of EGR.

The general arrangement and operation of a conventional device of this type will be described with reference to Figs. 1 and 2 of the accompanying drawings. Further details of such a device are described in U.S. Patent No. 4,257,382.

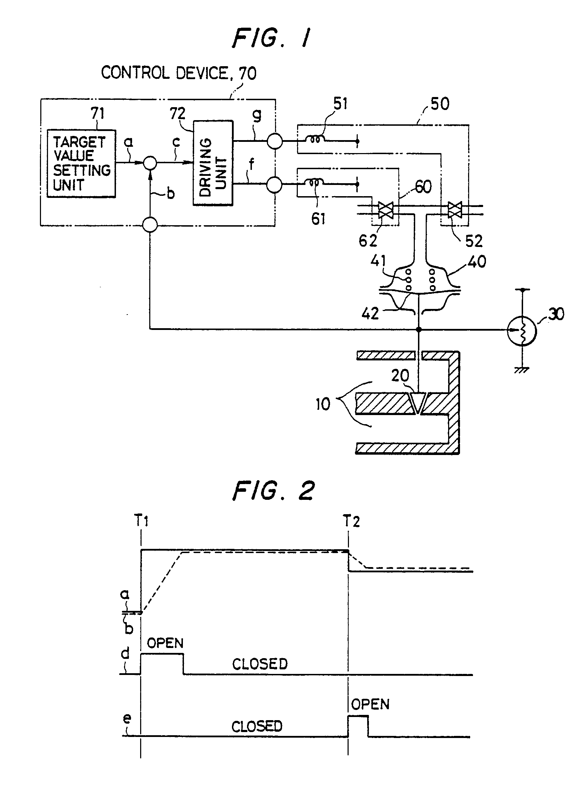

In Fig. 1, an EGR passage 10 connects an exhaust pipe of an engine (not shown) to the engine's intake manifold. A needle valve 20 is provided in the EGR passage, a position sensor 30 detects the operating position of the needle valve 20, a negative pressure motor or actuator 40 has a spring 41 and a diaphragm 42, for driving the needle valve 20 with a negative air pressure, a solenoid valve 50 includes a valve 52 for opening the operating negative pressure chamber of the negative pressure motor 40 to the atmosphere and a solenoid 51 for operating the valve 52, a solenoid valve 60 is formed from a valve 62 for opening the operating negative pressure chamber to a negative pressure source (for instance, the intake manifold) and a solenoid 61 for operating the valve 62, and a control device 70 is implemented with a microcomputer. More specifically, the control device 70 includes a target value setting unit 71 for setting a target value $a$ for the operating position of the needle valve 20 according to operating parameters of the engine, such as the engine speed and the temperature of the coolant, and a driving unit 72 for driving the negative pressure motor or actuator by means of the solenoid valves 50 and 60 according to the positional deviation $c$ between the target value $a$ and the actual position $b$ of the needle valve 20 which is detected by the position sensor 30. Fig. 1 shows in a sectional view the EGR passage 10 and the negative pressure motor.

In the device thus constructed, as the needle valve 20 is moved upwardly in Fig. 1, the effective diameter of the EGR passage 10 is increased, and as the needle valve 20 is moved downwardly, the effective diameter is decreased. Therefore, the effective diameter of the EGR passage is determined from the position $b$ of the needle valve 20, and the EGR amount is determined from the effective diameter. That is, a desired amount of EGR can be obtained by setting the position $b$ of the needle valve to a desired value. The aforementioned setting unit 71 is operated to set the position $b$ of the needle value to a desired value.

A general description of the control of the needle valve 20 will be made with reference to a timing chart shown in Fig. 2.

Figure 2 shows the above-described target value $a$; the aforementioned actual position $b$; the open and closed states $d$ of the valve 62; and the open and closed states $e$ of the valve 52.

For instance, when the target value $a$ is increased to open the EGR passage with the operation of the engine at the time instant $T_1$, the positional deviation $c$ is increased in the positive direction. In this case, the driving unit operates in response to the increase of the positional deviation $c$ to open the valve 62 and to close the valve 52. As a result, the operating negative pressure chamber of the negative pressure motor 40 is opened by the valve 62 to the negative pressure source. Accordingly, the diaphragm 42 is pulled by the operating negative pressure against the force of the spring 41, while the needle valve 20 opens the EGR passage in association with the movement of the diaphragm 42. At the same time, the actual position $b$ of the needle valve 20 is moved upwardly by this operation. The actual position soon reaches the target value $a$, and the positional deviation $c$ is eliminated. Thereupon, the driving unit 72 operates to close both of the valves 52 and 62, as a result of which the operating negative pressure is held in the negative pressure chamber of the negative pressure motor 40 so that the actual position $b$ of the needle valve 20 is maintained unchanged.

When the target value $a$ is decreased to close the EGR passage at the time instant $T_2$, the positional deviation $c$ is increased in the negative direction. In this case, the driving unit 72 operates in response to the decrease of the target value $a$ to open the valve 52 and to close the valve 62. As a result, the negative pressure chamber of the negative pressure motor 40 is opened to the atmosphere. Accordingly, the diaphragm is pushed downwardly by the force of the spring 41 while the needle valve 20 is also moved in the direction to close the EGR passage 10. At the same time, the actual position $b$ of the needle valve 20 is moved downwardly. The actual position $b$ soon reaches the target value $a$, and the positional deviation $c$ is eliminated. Thereupon, the driving unit 72 closes both of the valves 52 and 62, as a result of which the operating negative pressure is held in the operating negative pressure chamber of the motor 40 and the actual position $b$ of the needle valve 20 is maintained unchanged. Thus, the position of the needle valve 20 is controlled to a value suitable for the operation of the internal combustion engine with the amount of EGR set to a suitable value.

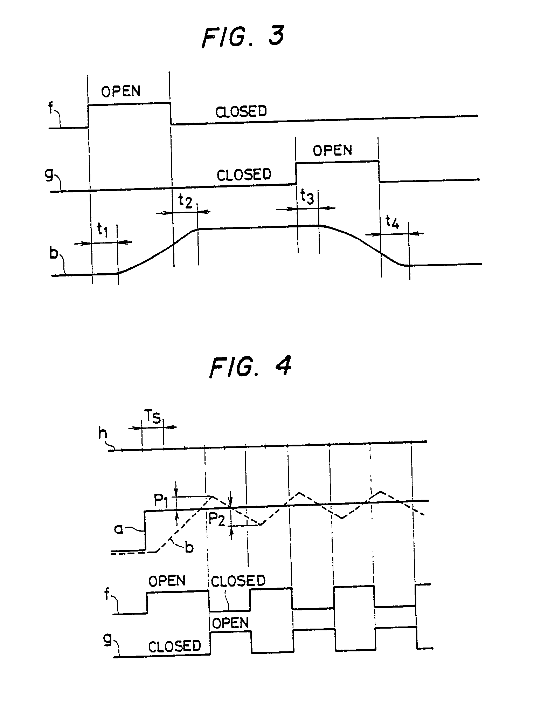

It should be noted that the above general description of the needle valve positional control disregards all the delays of operation which are involved in various parts of the control system, that is, the description has been made of the premise that the control system is ideal. In practice, the control system involves various operational delays. For instance, the solenoid valve 50 or 60 takes a certain period of time to accomplish its opening or closing operation after it receives the drive signal, and the negative pressure motor or actuator 40 starts it driving operation a predetermined period of time after the valve has been closed or opened. Fig. 3 is a timing chart showing such typical delays of operation in the control system. Fig. 3 shows a drive signal $f$ for opening the solenoid valve 60; a drive signal $g$ for closing the solenoid valve 50; and the actual position $b$ of the needle valve. Fig. 3 shows the delays which occur until the results of the drive signals $f$ and $g$ produced by the control device 70 are fed back. As soon in Fig. 3, the feedback system includes times delays $t_1$, $t_2$, $t_3$ and $t_4$. For instance, for a time $t_2$ after the "open" state of the solenoid valve 60 has been changed by dropping of drive signal $f$ to the "closed" state, the actual position $b$ continues to move upwardly, and for a time $t_4$ after the "open" state of the drive signal $g$ of the solenoid valve 50 has been changed to the "closed" state, the actual position $b$ continues to move downwardly. Since it takes a certain period of time for the control device 70 to perform its processing operation, the sampling period required for the control device 70 to sample the actual position $b$ has a finite value. The delay due to the sampling period increases the aforementioned delay times $t_1$, $t_2$, $t_3$ and $t_4$, thus causing a so-called "limit cycle phenomenon" in which the fed-back actual position varies around the target position with a certain period. The limit cycle phenomenon results in positional "hunting".

This hunting phenomenon will be described with reference to the timing chart of Fig. 4. In Fig. 4, $h$ indicates the sampling period $T_s$ of the actual position $b$ of the control device 70. The other waveforms are the same as shown in Figs. 2 and 3. It is assumed that the target value $a$ increases. In this case, in synchronization with the sampling time, the drive signal $f$ has the "open" state, and the actual position $b$ moves upwardly, soon reaching the target value $a$. Since the sampling period $T_s$ is non-zero, the drive signal $f$ is maintained in the "open" state until the next sampling time after the actual position $b$ has reached the target position $a$. At this next sampling time, the drive signal $f$ will be placed in the "closed" state while the drive signal $g$ will be placed in the "open" state. However, since the driving system incurs delays as described, for a certain period of time after the sampling time, the actual position $b$ continues to move upwardly, as a result of which an overshoot occurs, as indicated at $P_1$ in Fig. 4. After the delay times have passed, the actual position $b$ starts moving downwardly. In this operation, as in the upward movement, an undershoot occurs, as indicated at $P_2$ in Fig. 4. Sub-

sequently, the overshoot and the undershoot are repeated.

An exhaust gas recirculation control method is known from JP—A—57041455 including a needle valve in an exhaust gas recirculation passage for setting an effective diameter of said passage, a position sensor for providing a signal representing a position of said needle valve, and an actuator for positioning said needle valve. The method of control comprises steps of setting a target value for the position of the needle valve according to predetermined operating conditions of the combustion engine and operating the actuating means with a drive pulse when the positional deviation between target value and actual position of the needle valve exceeds a certain value, the next drive pulse being initiated at the next sampling time. This procedure is repeated at each sampling interval. This system has the disadvantage that the control system cannot follow the operating conditions of the engine during rapidly changing transient conditions and it is necessary to provide a further means to shut down the system if stable conditions are not achieved within a set time.

A further exhaust gas recirculation control method and apparatus is known from JP—A—5 70 44 760 in which the position of the needle valve is sensed and a drive pulse to energize the solenoid valve is produced therefrom whereby the width of the drive pulse is proportional to the positional deviation between target and actual values of the needle valve. The preambles of the independent claims 1 and 2 are based on the features of the method and apparatus described in this document.

Accordingly, an object of the present invention is to eliminate the position hunting phenomenon due to the delays of operation in the position control system and the finite sampling period. More specifically, an object of the invention is to provide an exhaust gas recirculation control method in which no hunting phenomenon is present and the position control is stable.

According to one aspect of the invention, an exhaust gas recirculation control method is provided for operating an exhaust gas recirculation control device of an internal combustion engine having:

valve means in an exhaust gas recirculation passage including a needle valve for setting an effective diameter of said passage and actuator means for positioning said needle valve, including the steps of:

providing a signal representing an actual position of said needle valve;

determining time intervals at which said signal is sampled,

setting a target value for said valve means according to predetermined operating conditions of said internal combustion engine, sensing said actual position of said valve means as represented by said signal provided by said position sensor driving said actuator means with a drive pulse the width of which is proportional to the magnitude of a positional deviation between said target value and said actual position the method being characterized by the following steps:

prohibiting the generation of said drive pulse when said positional deviation is within a predetermined range;

setting said sample time intervals to be equal in duration;

preventing generation of a next subsequent drive pulse for a predetermined period of time only after completion of said drive pulse for operating said actuator means;

whereby said time interval is shorter in duration than said predetermined period of time.

According to another aspect of the invention, there is provided an exhaust gas recirculation control apparatus for operating an exhaust gas recirculation control device of an internal combustion engine said apparatus comprising:

valve means provided in an exhaust gas recirculation passage including a needle valve for setting an effective diameter of said passage;

a position sensor for providing a signal representing a position of said valve means;

timing means for determining time intervals at which said signal is sampled;

actuator means for positioning said valve means;

means for sensing said actual position of said valve means as represented by said signal provided by said position sensor;

means for setting a target value for said valve means according to predetermined operating conditions of said internal combustion engine;

means for driving said actuator means with drive pulse the width of which is proportional to the magnitude of a positional deviation between said target value and said actual position of said valve means, characterized by

dead zone setting means for prohibiting, when said positional deviation between said target value and the actual position is within a predetermined range, generation of the drive pulse from said driving means,

said timing means setting the sampling time intervals to be equal in duration;

pause setting means for preventing generation of a next subsequent drive pulse for a predetermined period of time whereby said time interval is shorter in duration than said predetermined period of time;

said pause setting means initiating the predetermined period of time only after the completion of a previous drive pulse.

For a better understanding of the invention, and to show how the same may be carried into effect, reference will now be made, by way of example, to the accompanying drawings, in which:

Figure 1 is an explanatory diagram showing the general arrangement of a conventional EGR control arrangement;

Figure 2 is a timing chart used for explanation of the operations of various elements in the arrangement of Figure 1;

Figure 3 is a timing chart showing delays of operation in the arrangement of Figure 1;

Figure 4 is a timing chart used for explanation of a hunting phenomenon in the arrangement of Figure 1;

Figure 5 is an explanatory diagram showing the arrangement of EGR control apparatus according to one embodiment of the invention; and

Figure 6 is a timing chart for explanation of the operations of various elements in the apparatus of Figure 5.

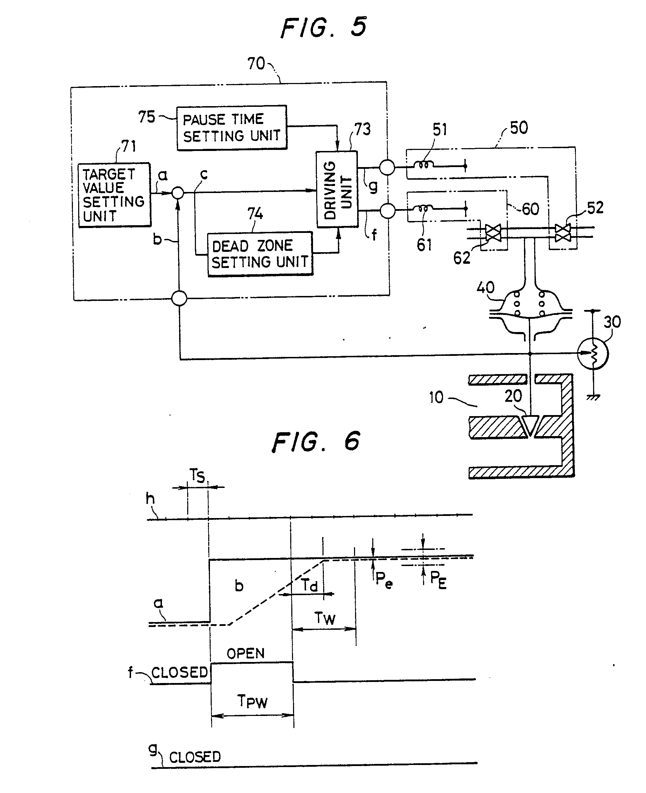

A preferred embodiment of the invention will be described with reference to Figures 5 and 6.

Figure 5 shows the arrangement of an EGR control arrangement for an internal combustion engine constructed and operating according to one embodiment of the invention. In Figure 5, those components which are analogous or similar to those previously described with reference to Figure 1 are designated by the same reference numerals or characters. Figure 5 illustrates: a pulse driving unit 73 for generating a pulse having a parameter, here its width, proportional to the value of the aforementioned position deviation $c$ as a drive signal $f$ or $g$ according to the nature of the deviation; a dead zone setting unit 74 which, when the value of the deviation $c$ is in a predetermined range $P_E$, causes the driving unit 73 to stop its pulse generating operation so that both the signals $f$ and $g$ are placed in the "closed" state; and a pause time setting unit 75 which, after the driving unit 73 has accomplished its pulse generating operation, causes the driving unit 73 to stop the generation of a new pulse for a certain period of time $T_W$.

The operation of the apparatus thus arranged will be described with reference to Figure 6.

The $a$, $b$, $f$, $g$ and $h$ signals shown in Figure 6 are the same as those in Figure 4.

It is assumed that the target value $a$ is increased with the variation of the operating condition of the internal combustion engine. In this case, the pulse driving unit 73 generates a pulse having a time width $T_{PW}$ proportional to the positional deviation $c$ (absolute value) which results from the increase of the target value $a$ to cause the drive signal $f$ to be in the "open" state for the time $T_{PW}$. As a result, the actual position $b$ is increased. Since the amount of increase of the actual position $b$ depends on the characteristics of the actuator 40 here shown as a negative pressure actuator, if the proportional relationship between the time width $T_{PW}$ and the positional deviation $c$ is suitably determined according to the characteristics of the actuator, then the pulse driving causes the actual position $b$ to approach the target value $a$. Since the position control system involves delays as described above, a certain time $T_d$ passes from when the pulse has been produced until the pulse driving affects the actual position *b*. Thus, at the time instant that the pulse is produced, the actual position *b* has not reached the target position *a* and a deviation *c* still remains. However, during the delay time $T_d$, due to the action of the pause time setting unit 75, no pulse is newly produced and the valves 50 and 60 remain closed. A pulse can again be supplied after a time $T_W$ which is set by the setting unit 75. If the time $T_W$ is set to be longer than the delay time $T_d$, then after the passage of the time $T_W$ the result of the pulse driving reflects the actual position *b* sufficiently accurately and therefore the deviation *c* is extremely small ($P_e$). If the deviation $P_e$ is smaller than the value $P_E$ which is set by the dead zone setting unit 74, by the action of the setting unit 74 the drive signals *f* and *g* continue to be in the "closed" state and the actual position *b* remains near the target value *a*. If the deviation $P_e$ is larger than the value $P_E$, a pulse is newly produced. Thus, as in the above-described operation, the pulse is successively supplied until the deviation $P_e$ becomes smaller than the value $P_E$. As long as the relationship between the drive pulse width $T_{PW}$ and the positional deviation *c* is set suitably, the number of pulses produced is not so large; that is, the actual position *b* is controlled to the target value *a* with the dead zone width ($P_E$).

The above description has been made with reference to the case where the target value *a* is increased. In the case where the target value is decreased, the drive signal *f* is pulsed and control is carried out in essentially the same manner.

As is apparent from the above description, according to the invention, a drive period corresponding to a pulse width determined according to the deviation between the actual position of the EGR control valve and the target value and the pause period of pulse driving according to the delay of the control system is provided. Therefore, the occurrence of the hunting phenomenon due to the delay of the control system is prevented. Accordingly, the EGR control method according to the invention provides stable positional control.

**Claims**

1. An exhaust gas recirculation control method for operating an exhaust gas recirculation control device of an internal combustion engine having: valve means (20) in an exhaust gas recirculation passage (10) including a needle valve for setting an effective diameter of said passage and actuator means (40) for positioning said needle valve, including the steps of:

providing a signal representing an actual position (b) of said needle valve;

determining time intervals ($T_S$) at which said signal is sampled,

setting a target value (a) for said valve means (20) according to predetermined operating conditions of said internal combustion engine, sensing said actual position (b) of said valve means (20) as represented by said signal provided by said position sensor (30) driving said actuator means (40) with a drive pulse the width of which is proportional to the magnitude of a positional deviation between said target value (a) and said actual position (b) the method being characterized by the following steps:

prohibiting the generation of said drive pulse when said positional deviation is within a predetermined range ($P_E$);

setting said sample time intervals ($T_S$) to be equal in duration;

preventing generation of a next subsequent drive pulse for a predetermined period of time ($T_W$) only after completion of said drive pulse for operating said actuator means,

whereby said time interval ($T_S$) is shorter in duration than said predetermined period of time ($T_W$).

2. An exhaust gas recirculation control apparatus for operating an exhaust gas recirculation control device of an internal combustion engine, said apparatus comprising:

valve means (20) provided in an exhaust gas recirculation passage (10) including a needle valve for setting an effective diameter of said passage;

a position sensor (30) for providing a signal representing a position (b) of said valve means (20);

timing means for determining time intervals ($T_S$) at which said signal is sampled;

actuator means (40) for positioning said valve means (20);

means for sensing said actual position (b) of said valve means (20) as represented by said signal provided by said position sensor (30);

means (71) for setting a target value for said valve means (20) according to predetermined operating conditions of said internal combustion engine;

means (73) for driving said actuator means (40) with drive pulse the. width of which is proportional to the magnitude of a positional deviation between said target value (a) and said actual position (b) of said valve means, characterized by

dead zone setting means (74) for prohibiting, when said positional deviation between said target value (a) and the actual position (b) is within a predetermined range, generation of the drive pulse from said driving means (73)

said timing means setting the sampling time intervals ($T_S$) to be equal in duration;

pause setting means (75) for preventing generation of a next subsequent drive pulse for a predetermined period of time ($T_W$) whereby said time intervals ($T_S$) is shorter in duration than said predetermined period of time ($T_W$);

said pause setting means (75) initiating the predetermined period of time ($T_W$) only after the completion of a previous drive pulse.

3. An internal combustion engine comprising apparatus according to claim 2.

4. An automobile comprising an internal combustion engine according to claim 3.

## Patentansprüche

1. Verfahren zur Steuerung der Abgasrückführung zum Betreiben einer Vorrichtung zur Steuerung der Abgasrückführung einer Brennkraftmaschine, mit sich in einem Abgasrückführungsdurchgang befindlichen Ventilmitteln (20), die ein Nadenventil zum Einstellen eines effektiven Durchmessers des Durchgangs und Betätigungsmittel (40) zum Positionieren des Nadelventils enthalten, enthaltend die folgenden Schritte:

Erzeugen eines Ist-Position (b) ded dem Nadelventils entsprechenden Signals;

Bestimmen von Zeitintervallen (T$_S$), in welchen das Signal abgetastet wird;

Festlegen eines Sollwerts (a) für die Ventilmittel (20) entsprechend vorbestimmten Betriebszuständen der Brennkraftmaschine, Erfassen der Ist-Position (b) der Ventilmittel (20), die dem von dem Positionsdetektor (30) gelieferten Signal entspricht, Antreiben der Betätigungsmittel (40) mit einem Antriebsimpuls, dessen Breite proportional der Größe der positionalen Abweichung zwischen dem Sollwert (a) und der Ist-Position (b) ist, gekennzeichnet durch die folgenden Schritte:

Verhindern des Erzeugens des Antriebsimpulses, wenn die positionale Abweichung innerhalb eines vorbestimmten Bereichs (P$_E$) liegt;

Einstellen der Abtastzeitintervalle (T$_S$) auf gleichmäßige Zeitintervalle;

Verhindern des Erzeugens eines nächstfolgenden Antriebsimpulses für eine vorbestimmte Zeitperiode (T$_W$) nur nach Beendigung des Antriebsimpulses zum Betreiben der Betätigungsmittel, wodurch das Zeitintervall (T$_S$) kürzer als die vorbestimmte Zeitperiode (T$_W$) ist.

2. Gerät zur Steuerung der Abgasrückführung zum Betreiben einer Vorrichtung zur Steuerung der Abgasführung einer Brennkraftmaschine mit Ventilmitteln (20), die in einem Abgasrückführungsdurchgang (10) vorgesehen sind, die ein Nadenventil zum Einstellen eines aktiven Durchmessers des Durchgangs enthalten;

einem Positionsdetektor (30) zum Liefern eines einer Position (b) der Ventilmittel (20) entsprechenden Signals;

Taktgebermitteln zum Feststellen von Zeitintervallen (T$_S$), in welchem das Signal abgetastet ist;

Betätigungsmitteln (40) zum Positionieren der Ventilmittel (20);

Mitteln zum Erfassen der Ist-Position (b) der Ventilmittel (20), die durch das von dem Positionsdetektor (30) gelieferte Signal dargestellt ist;

Mitteln (71) zum Festlegen eines Sollwertes für die Ventilmittel (20) entsprechend vorbestimmten Betriebszuständen der Brennkraftmaschine;

Mitteln (73) zum Antreiben der Betätigungsmittel (40) mit einem Antriebsimpuls, dessen Breite proportional der Größe einer positionalen Abweichung zwischen dem Sollwert (a) und der Ist-Position (b) der Ventilmittel ist; gekennzeichnet durch

Totbereicheinstellungsmittel (74) zum Verhindern des Erzeugens des Antriebsimpuls von den Antriebsmitteln (73), wenn die positionale Abweichung zwischen dem Sollwert (a) und der Ist-Position (b) innerhalb eines vorbestimmten Bereichs liegt;

wobei die Taktgebermittel die Abtastzeitintervalle (T$_S$) auf gleiche Dauer einstellen;

Pauseneinstellungsmittel (75) zum Verhindern des Erzeugens eines nächstfolgenden Antriebsimpulses für eine vorbestimmte Zeitperiode (T$_W$), wodurch das Zeitintervall (T$_S$) eine kürzere Dauer als die vorbestimmte Zeitperiode (T$_W$) hat;

wobei die Pauseneinstellungsmittel (75) die vorbestimmte Zeitperiode (T$_W$) nur nach Beendigung eines vorherigen Antriebsimpulses einleiten.

3. Brennkraftmaschine mit einem Gerät nach Anspruch 2.

4. Fahrzeug mit einer Brennkraftmaschine nach Anspruch 3.

## Revendications

1. Méthode de commande du recyclage des gaz d'échappement pour actionner un dispositif de commande du recyclage des gaz d'échappement d'un moteur à combustion interne comprenant:

un moyen formant vanne (20) dans un conduit de recyclage des gaz d'échappement comprenant une soupape à pointeau pour régler un diamètre effectif dudit conduit et un moyen d'actionnement (40) pour positionner ladite soupape à pointeau, comprenant les phases suivantes:

—production d'un signal représentant une position effective (b) de ladite soupape à pointeau;

—détermination d'intervalles de temps (T$_s$) auxquels ledit signal est échantillonné;

—réglage d'une valeur de consigne (a) pour ledit moyen formant vanne (20) selon des conditions de fonctionnement prédéterminées dudit moteur à combustion interne, détection de ladite position effective (b) dudit moyen formant vanne (20) telle que représentée par ledit signal produit par ledit capteur de position (30), entraînement dudit moyen d'actionnement (40) par une impulsion d'entraînement dont la largeur est proportionnelle à l'amplitude d'une déviation de position entre ladite valeur de consigne (a) et ladite position effective (b), la méthode étant caractérisée par les phases suivantes:

—interdiction de produire ladite impulsion d'entraînement lorsque ladite déviation de position est comprise dans une gamme de valeurs prédéterminées (P$_E$);

—réglage desdits intervalles de temps d'échantillonnage (Ts) pour qu'ils soient égaux en durée;

—empêchement de la production d'une impulsion d'entraînement suivante pendant une période de temps prédéterminée (T$_W$) seulement après achèvement de ladite impulsion d'entraînement pour commander ledit moyen d'actionnement;

de telle sorte que ledit intervalle de temps (T$_S$) soit plus court que ladite période de temps prédéterminée (T$_W$).

2. Appareil de commande du recyclage des gaz d'échappement pour actionner un dispositif de commande du recyclage des gaz d'échappement d'un moteur à combustion interne, ledit appareil comprenant:

un moyen formant vanne (20) placé dans un conduit de recyclage des gaz d'échappement (10) comprenant une soupape à pointeau pour régler un diamètre effectif dudit conduit;

un capteur de position (30) pour produire un signal représentant une position (b) dudit moyen formant vanne (20);

un moyen de synchronisation pour déterminer des intervalles de temps ($T_s$) auxquels ledit signal est échantillonné;

un moyen d'actionnement (40) pour positionner ledit moyen formant vanne (20);

un moyen pour détecter ladite position effective (b) dudit moyen formant vanne (20) tel que représenté par ledit signal fourni par ledit capteur de position (30);

un moyen (71) pour définir une valeur de consigne pour ledit. moyen formant vanne (20) selon des conditions de fonctionnement prédéterminées dudit moteur à combustion interne;

un moyen (73) pour entraîner ledit moyen d'actionnement (40) par une impulsion d'entraînement dont la largeur est proportionnelle à l'amplitude d'une déviation de position entre ladite valeur de consigne (a) et ladite position effective (b) dudit moyen formant vanne, caractérisé par

un moyen de définition (74) d'une zone neutre pour interdire, lorsque ladite déviation de position entre ladite valeur de consigne (a) et la position effective (b) est comprise dans une gamme de valeurs prédéterminée, la production de l'impulsion d'entraînement par ledit moyen d'entraînement (73),

ledit moyen de synchronisation réglant les intervalles de temps d'échantillonnage ($T_s$) de manière à ce qu'ils soient égaux en durée;

un moyen de définition de pause (75) pour empêcher la production d'une impulsion d'entraînement suivante pendant une période de temps prédéterminée ($T_w$), de telle sorte que ledit intervalle de temps ($T_s$) soit plus court que ladite période de temps prédéterminée ($T_w$),

ledit moyen de définition de pause (75) commençant la période de temps prédéterminée ($T_w$) seulement après l'achèvement de l'impulsion d'entraînement précédente.

3. Moteur à combustion interne comprenant un appareil selon la revendication 2.

4. Automobile comprenant un moteur à combustion interne selon la revendication 3.

## FIG. 1

CONTROL DEVICE, 70

## FIG. 2

1

EP 0 115 862 B1

# FIG. 3

# FIG. 4

## FIG. 5

70

75 — PAUSE TIME SETTING UNIT

71 — TARGET VALUE SETTING UNIT

75

73 — DRIVING UNIT

74 — DEAD ZONE SETTING UNIT

a

c

b

g

f

51

50

60

61

52

62

40

30

10

20

## FIG. 6

Ts

h

b

a

Td

Pe

PE

Tw

f — CLOSED

OPEN

TPW

g — CLOSED

3